# EUROPEAN PATENT APPLICATION

(11) **EP 3 872 625 A1**
(43) Date of publication of application: **01.09.2021**
(21) Application number: 20160123.4
(22) Date of filing: 28.02.2020
(51) Int. Cl.: G06F 8/70, G06F 8/30, G06F 8/60

(54) **METHOD AND SYSTEM FOR MANAGING AN APP**

(71) Applicant: Mendix Technology B.V., 3072 AP Rotterdam (NL)
(72) Inventor: SALINAS GANCEDO, Carlos, 2518 AX The Hague (NL)
(74) Representative: Maier, Daniel Oliver

(57) **Abstract**

A computer-implemented method of managing an app (120) and a computer system (100, 124) arranged and configured to execute the steps of the computer-implemented method are provided. The computer-implemented method includes:
providing a remote app development user interface (UI) (122) to a user for developing the app (120), wherein the remote app development UI (122) is communicatively coupled to a remote app management platform (124);
creating, by the remote app management platform (124), the app (120) based on the user's interaction with the remote app development UI (122);
receiving from the user information about a type of use and a target computing system (150) of the app (120), respectively, via a remote app management UI (128) which is provided to the user and which is communicatively coupled to the remote app management platform (124);
causing the target computing system (150) to receive from the remote app management platform (124) the app (120) and information about an environment (126) suitable for the type of use and target computing system (150) of the app (120); and
causing the target computing system (150) to use the app (120) in the environment (126).

## Description

### Technical field

The present disclosure is directed, in general, to software management systems, in particular systems for managing apps, that may be used to manage, build, test, deploy and iterate such apps (collectively referred to herein as product systems).

### Background

Recently, an increasing number of computer software products is used both for personal needs and for business needs in the form of applications, throughout the present patent document simply called "apps". Such apps may be used in a mobile context as well as on cloud computing platforms and "on premise" and may provide a specific set of functions. The present invention generally relates to the management of such apps.

Currently, there exist product systems and solutions which support app management. Such product systems may benefit from improvements.

### Summary

Variously disclosed embodiments include methods and computer systems that may be used to facilitate managing an app.

According to a first aspect of the invention, a computer-implemented method of managing an app may include: providing a remote app development user interface (UI) to a user for developing the app, wherein the remote app development UI is communicatively coupled to a remote app management platform; creating, by the remote app management platform, the app based on the user's interaction with the remote app development UI; receiving from the user information about a type of use and a target computing system of the app, respectively, via a remote app management UI which is provided to the user and which is communicatively coupled to the remote app management platform; causing the target computing system to receive from the remote app management platform the app and information about an environment suitable for the type of use and target computing system of the app; and causing the target computing system to use the app in the environment.

According to a second aspect of the invention, a computer system may be arranged and configured to execute the steps of this computer-implemented method of managing an app. In particular, the described computer system may be arranged and configured to execute the following steps: providing a remote app development user interface (UI) to a user for developing the app, wherein the remote app development UI is communicatively coupled to a remote app management platform; creating, by the remote app management platform, the app based on the user's interaction with the remote app development UI; receiving from the user information about a type of use and a target computing system of the app, respectively, via a remote app management UI which is provided to the user and which is communicatively coupled to the remote app management platform; causing the target computing system to receive from the remote app management platform the app and information about an environment suitable for the type of use and target computing system of the app; and causing the target computing system to use the app in the environment.

According to a third aspect of the invention, a computer-readable medium may be encoded with executable instructions, that when executed, cause the described computer system to carry out the described method of managing an app. By way of example, the described computer-readable medium may be non-transitory and may further be a software component on a storage device.

The foregoing has outlined rather broadly the technical features of the present disclosure so that those skilled in the art may better understand the detailed description that follows. Additional features and advantages of the disclosure will be described hereinafter that form the subject of the claims. Those skilled in the art will appreciate that they may readily use the conception and the specific embodiments disclosed as a basis for modifying or designing other structures for carrying out the same purposes of the present disclosure. Those skilled in the art will also realize that such equivalent constructions do not depart from the spirit and scope of the disclosure in its broadest form.

Also, before undertaking the detailed description below, it should be understood that various definitions for certain words and phrases are provided throughout this patent document and those of ordinary skill in the art will understand that such definitions apply in many, if not most, instances to prior as well as future uses of such defined words and phrases. While some terms may include a wide variety of embodiments, the appended claims may expressly limit these terms to specific embodiments.

### Brief description of the drawings

- Fig. 1: illustrates a functional block diagram of an example system that facilitates managing an app in a product system as well as an example target computing system.
- Figs. 2-3: illustrate functional block diagrams of other exemplary target computing systems.
- Fig. 4: illustrates a functional block diagram of another exemplary remote app management platform.
- Fig. 5: illustrates a flow diagram of an example methodology that facilitates managing apps in a product system.
- Fig. 6: illustrates a block diagram of a data processing system in which an embodiment can be implemented.

### Detailed description

Various technologies that pertain to systems and methods for managing an app in a product system will now be described with reference to the drawings, where like reference numerals represent like elements throughout. The drawings discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged apparatus. It is to be understood that functionality that is described as being carried out by certain system elements may be performed by multiple elements. Similarly, for instance, an element may be configured to perform functionality that is described as being carried out by multiple elements. The numerous innovative teachings of the present patent document will be described with reference to exemplary non-limiting embodiments.

An app generally refers to a software program which on execution performs specific desired tasks. In general, several apps are executed in a runtime environment containing one or more operating systems ("OSs"), virtual machines (e.g., supporting Java™ programming language), device drivers, etc.

Apps can be created, edited, and represented using traditional source code. Examples of such traditional source code include C, C++, Java, Flash, Python, Perl, and other script-based methods of representing an app. Developing, creating and managing such script-based apps, or parts of such script-based apps can be accomplished by manual coding of suitably trained users.

Developers often use Application Development Frameworks ("ADFs") (which are by themselves applications or apps) for implementing/developing desired apps. An ADF provides a set of pre-defined code/data modules that can be directly/indirectly used in the development of an app. An ADF may also provide tools such as an Integrated Development Environment ("IDE"), code generators, debuggers, etc., which facilitate a developer in coding/implementing the desired logic of the app in a faster/simpler manner.

In general, an ADF simplifies app development by providing reusable components which can be used by app developers to define user interfaces ("UIs") and app logic by, for example, selecting components to perform desired tasks and defining the appearance, behavior, and interactions of the selected components. Some ADFs are based on a model-view-controller design pattern that promotes loose coupling and easier app development and maintenance.

According to another approach, apps can also be created, edited, and represented using visual model-based representations. Unlike traditional source code implementations, such apps can be created, edited, and/or represented by drawing, moving, connecting, and/or disconnecting visual depictions of logical elements within a visual modeling environment. Visual-model based representations of apps can use symbols, shapes, lines, colors, shades, animations, and/or other visual elements to represent logic, data or memory structures or user interface elements. In order to program a traditional script-based app, programmers are typically required to type out detailed scripts according to a complicated set of programming syntax rules. In contrast, programming a visual model-based app can, in some cases, be done by connecting various logical elements (e.g., action blocks and/or decision blocks) to create a visual flow chart that defines the app's operation. Similarly, defining data structures (e.g., variable types, database objects, or classes) and/or user interface elements (e.g., dropdown boxes, lists, text input boxes) in a visual model-based app can be done by drawing, placing, or connecting visual depictions of logical elements within a virtual workspace, as opposed to typing out detailed commands in a script. Visual-model based apps can therefore be more intuitive to program and/or edit compared to traditional script-based apps.

For brevity, references to a "model," a "visual model," or an "application" or "app" should be understood to refer to visual model-based apps unless specifically indicated. In some cases, such visual model-based apps can represent complete, stand-alone apps for execution on a computer system. Visual model-based apps can also represent discrete modules that are configured to perform certain tasks or functions, but which do not represent complete apps-instead, such discrete modules can be inserted into a larger app or combined with other discrete modules to perform more complicated tasks. Example of such discrete modules can include modules for validating a ZIP code, for receiving information regarding current weather from a weather feed, and/or for rendering graphics.

Visual models can be represented in two forms: an internal representation and one or more associated visual representations. The internal representation can be a file encoded according to a file format used by a modeling environment to capture and define the operation of an app (or part of an app). For example, the internal representation can define what inputs an app can receive, what outputs an app can provide, the algorithms and operations by which the app can arrive at results, what data the app can display, what data the app can store, etc. The internal representation can also be used to instruct an execution environment how to execute the logic of the app during runtime. Internal representation can be stored in the form of non-human-readable code (e.g., binary code). Internal representation can also be stored according to a binary stored JSON (java script object notation) format, and/or an XML format. At run-time, an execution engine can use internal representation to compile and/or generate executable machine code that, when executed by a processor, causes the processor to implement the functionality of the model.

The internal representation can be associated with one or more visual representations. Visual representations can comprise visual elements that depict how an app's logic flows, but which are not designed to be compiled or executed. These visual representations can comprise, for example, flow-charts or decision trees that show a user how the app will operate. The visual models can also visually depict data that is to be received from the user, data that is to be stored, and data that is to be displayed to the user. These visual models can also be interactive, which allows a user to manipulate the model in an intuitive way. For example, visual representations can be configured to display a certain level of detail (e.g., number of branches, number of displayed parameters, granularity of displayed logic) by default. However, users can interact with the visual representation in order to show a desired level of detail-for example, users can display or hide branches of logic, and/or display or hide sets of parameters. Details relating to an element of the visual model can be hidden from view by default but can appear in a sliding window or pop-up that appears on-screen when the user clicks on the appropriate element. Users can also zoom in or out of the model, and/or pan across different parts of the model, to examine different parts of the model. Users can also copy or paste branches of logic from one section of the model into another section, or copy/paste branches of logic from a first model into a second model. In some cases, parts of the model can contain links to other parts of the model, such that if a user clicks on a link, the user will automatically be led to another part of the model. A viewing user can interact with a visual representation in at least some of the same ways that the viewing user might interact with the model if it were displayed within a modeling environment. In other words, the visual representation can be configured to mimic how the model would appear if it were displayed within a visual modeling environment. A single internal representation can correspond to multiple visual representations that use different styles or formatting rules to display app logic. For instance, multiple visual representations corresponding to the same internal representation can differ from one another in their use of color, elements that are included or omitted, and use of symbols, shapes, lines, colors, and/or shades to depict logic flow.

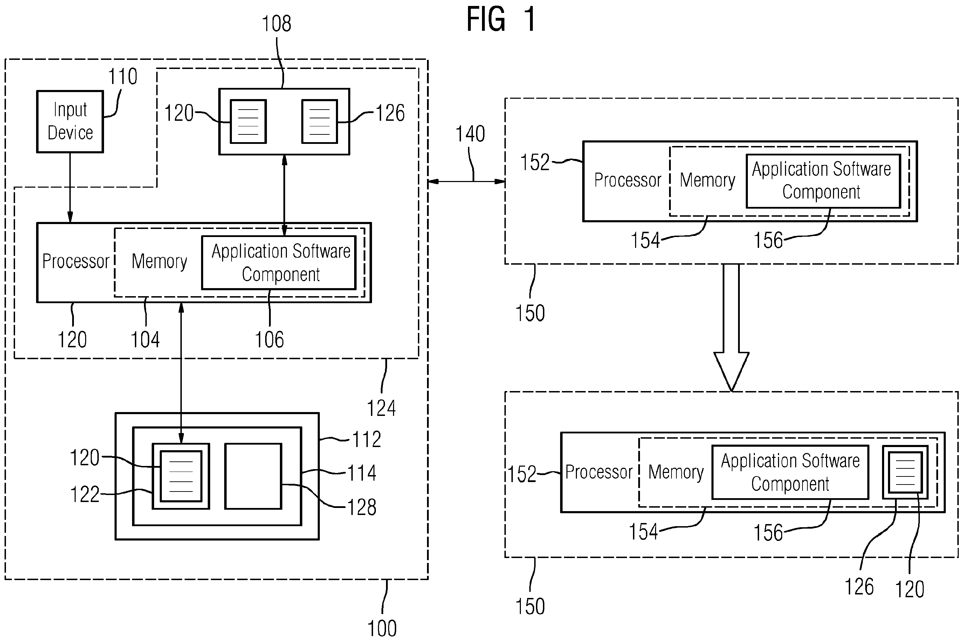

With reference to Fig. 1, a functional block diagram of an example computer system or data processing system 100 is illustrated that facilitates managing an app 120. Additionally, an example target computing system 150 interacting with the example computer system or data processing system 100 is illustrated in Fig. 1. The processing system 100 may include a remote app management platform 124 including at least one processor 102 that is configured to execute at least one application software component 106 from a memory 104 accessed by the processor 102. The application software component 106 may be configured (i.e., programmed) to cause the processor 102 to carry out various acts and functions described herein. For example, the described application software component 106 may include and/or correspond to one or more components of an app development application that is configured to generate and store product data in a data store 108 such as a database. Furthermore, the described application software component 106 may include and/or correspond to one or more components of an app management application.

By way of example, the remote app management platform 124 may be cloud-based, internet-based and/or be operated by a provider providing app development and management support, including e.g. supporting low-code and/or visual model-based app development. The user may be located in the vicinity of the target computing system 150 or anywhere else, e.g. using a mobile device for connecting to the remote app management platform 124, e.g. via the internet, wherein the mobile device may include an input device 110 and a display device 112.

The target computing system 150 may include at least one processor 152 that is configured to execute at least one application software component 156 from a memory 154 accessed by the processor 152. The application software component 156 may be configured (i.e., programmed) to cause the processor 152 to carry out various acts and functions described herein.

Examples of product systems that may be adapted to include the app creation and/or management features described herein may include the low-code software platform of Mendix Inc., of Boston, Massachusetts, USA. This platform provides tools to build, test, deploy, iterate and manage apps and is based on visual, model-driven software development. However, it should be appreciated that the systems and methods described herein may be used in other product systems (e.g., PLM, PDM, ALM systems) and/or any other type of system that generates and stores product data in a database. Also, examples of databases that may be used as one or more data stores described herein include database server applications such as Oracle, Microsoft SQL Server, or any other type of data store that is operative to store data records.

It should be appreciated that it can be difficult and time-consuming to manage apps in complex app development and/or management environments. For example, advanced coding or software management knowledge of users may be required, or selections of many options need to be made consciously, both involving many manual steps, which is a long and not efficient process.

To enable the enhanced management of apps 120, the described product system or processing system 100 may include at least one input device 110 and at least one display device 112 (such as a display screen). The described processor 102 may be configured to generate a GUI 114 through the display device 112. Such a GUI may include GUI elements such as buttons, links, search boxes, lists, text boxes, images, scroll bars) usable by a user to provide inputs through the input device 110 that cause creating an app 120. In particular, the GUI may comprise a remote app development 122 to a user for developing the app 120.

In an example embodiment, the application software component 106 and/or the processor 102 may be configured to provide the app development UI 122 to a user for developing the app 120. The remote app development UI 122 may communicatively be coupled to the remote app management platform 124. For the creation of the app 120, the application software component 106 and/or the processor 100 may be configured to capture the user's interactions with the remote app development UI 122. The application software component 106 and/or the processor 102 may be configured to develop and create the app 120 through the remote app development UI 122 based on the user's interaction with the remote app development UI 122.

The provided app development UI 122 may, by way of example, interact with an ADF, IDE or visual model-based representations which are mentioned above and which may be used to develop the app 120. The app development UI 122 may be displayed to the user using the display device 112. The user may provide his app development intent via his input to the remote app development UI 122 using the input device 110.

By way of example, a visual representation of a model characterizing the app 120 may be displayed to a user via the remote app development UI 122. Such an example may occur in the context of the above-mentioned low-code app development which may involve visual model-based app development. In example embodiments, the creation or generation of the app 120 using the remote app development UI 122 and/or the remote app management platform 124 may already be completed when a model and/or visual representation characterizing the app 124, e.g. the apps's functionalities and/or interfaces, has been achieved based on the user's interaction with the remote app development UI 122.

In example embodiments, the application software component 106 and/or the processor 102 may be configured to receive from the user information about a type of use and a target computing system 150 of the app 120, respectively, via a remote app management UI 128 which is provided to the user and which is communicatively coupled to the remote app management platform 124. The remote app management UI 128 may be provided to the user for managing the app 120. In some examples, the user may also manage one or more app(s) 120, environment(s), type(s) of app use(s), and/or target computing system(s) 150 via the remote app management UI 128. By way of example, the target computing system 150 may be a target device on which the created app 120 shall be used or made available, e.g. to one or more users, for use.

In example embodiments the remote app management UI 128 may provide a selection of available types of use of an app and/or a selection of available target computing systems. In some examples, the user may define a type of use of an app and/or a target computing system which is not yet available in the remote app management UI 128 and/or the remote app management platform 124. For the definition of a specific target computing system 150, the user may, by way of example, provide the internet address allowing for communication of the remote app management platform 124 with the target computing system and/or characteristic properties of the target computing system, e.g. including type and number of processors, memory, data storage, operating system, interfaces, geographical location, or any combination thereof.

It should also be appreciated that in some examples, the remote app development UI 122 and/or the remote app management UI 128 may be accessible to the user through a browser or a client. In some example embodiments, the functionalities of remote app development UI 122 and the remote app management UI 128 are available in one unified remote app interaction UI which is communicatively coupled to the remote app management platform 124 and provided to the user for interaction.

The application software component 106 and/or the processor 102 may further be configured to cause the target computing system 150 to receive from the remote app management platform 124 the app 120 and information about an environment 126 suitable for the type of use and the target computing system 150 of the app 120. By way of example, the environment 126 may include software components which may be necessary for the processor 152 of the target computing system 152 to use, e.g. run, the app as indicated by the user. In example embodiments, the information about the environment 126 may include the environment 126 so that the target computing system 150 may receive the suitable environment from the remote app management platform 124.

In an example embodiment, the information about the environment 126 may include an identifier and/or characteristic properties of the environment 126 specifically suitable for the type of use and the target computing system 150 indicated by the user. Example embodiments may include scenarios in which the target computing system 150 may have access to the suitable environment 126 which may be available, e.g. on a data store of the target computing system 150 or by retrieving the suitable environment 126 by the target computing system 150 from another source, e.g. the internet. In an example embodiment, the suitable environment 126 may additionally or alternatively be available to the remote app management platform 124.

By way of example, the remote app management platform 124 may have access to various environments 126 which are suitable for different types of use of apps 120 and for different target computing systems 150. These environments 126 may, e.g., be stored in the data store 108. The remote app management platform 124 may determine which environment 126 is suitable for a given type of use and a given target computing system 150. The remote app management platform 124 may make available for retrieval by the target computing system 150 the environment 126 specifically suitable for the type of use and the target computing system 150 indicated by the user.

In example embodiments, the target computing system 150 may actively retrieve and/or pull the app 120 and the information about the environment 126 from the remote app management platform 124. This may imply that the remote app management platform 124 may not actively push the app 120 and the information about the environment 126 to the target computing system 150. Hence, the data transfer for transferring the app 120 and information about the environment 126 may only start when or after the target computing system 150 actively requests this data from the remote app management platform 124. By way of example, the target computing system 150 actively retrieves and/or pulls the environment 126 from the remote app management platform 124.

By way of example, a data connection 140 may communicatively connect the remote app management platform 124 and the target computing system 150. It should also be appreciated that in some examples, the data connection is configured for bidirectional communication between the remote app management platform 124 and the target computing system 150. The data connection 140 may, e.g., be wireless using mobile broadband, Wi-Fi, or the like, or wired.

In example embodiments, the application software component 106 and/or the processor 102 may further be configured to cause the target computing system 150 to use the app 120 in the environment 126.

In example embodiments, the target computing system 150 may be caused to provide the environment 126 for using the app 120 in the environment 126 on the target computing system 150.

By way of example, the target computing system 150 may include at least one processor 152 of a local, remote or mobile device, a local or remote computing platform, a platform-as-a-service, or any combination thereof.

The local device may, e.g., include a desktop computer, a TV, devices related to smart home appliances, home entertainment or home automation or the like. In an industrial context, the local device may, e.g., include an edge device. Such edge devices may, e.g., include fields devices, like sensors, motors, pumps, valves, inverters, actors, robots, or the like, or may include control devices, like programmable logic controllers (PLCs), or the like, or any combination thereof. Further, in an industrial context, the local device may include devices related to an industrial control system, e.g. supervisory control and data acquisition (SCADA) or control devices related to distributed control systems (DCSs).

In example embodiments, the mobile device may include a smartphone, a handheld computer, a tablet computer, a smart-watch or the like. By way of example, the local computing platform may include computer system resources, especially data storage and computing power, e.g. managed and operated "on-premises", i.e. on the premises of the user or an organization to which the user using the software adheres. In example embodiments such local computing platforms, but also generally any kind of target computing system 150, may involve running the OpenShift Container Platform developed by Red Hat Inc., of Raleigh, NC, USA. This container platform is an on-premises platform as a service built around Docker containers orchestrated and managed by Kubernetes on a foundation of Red Hat Enterprise Linux. Docker containers are of Docker Inc., of San Francisco, CA, USA and Kubernetes is an open-source container-orchestration system for automating application deployment, scaling, and management of Google LLC, of Mountain View, CA, USA.

In example embodiments, the remote computing platform includes on-demand cloud computing platforms managed and operated, e.g., by the large cloud infrastructure providers, such as AWS, Microsoft, Google, IBM, Alibaba, or the like. Such remote computing platforms are sometimes also known as infrastructure-as-a-service. It should also be appreciated that in some examples, a platform-as-a-service may include cloud computing services that provides a platform allowing customers to develop, run, and manage applications without the complexity of building and maintaining the infrastructure typically associated with developing and launching an app. Such a platform-as-a-service may, e.g., include MindSphere of Siemens Aktiengesellschaft, of Munich and Berlin, Germany. More generally, the target computing system 150 may also include Internet of Things (IoT) operating systems, in particular Industrial Internet of Things (IIoT) systems.

In some examples, e.g. when the target computing system 150 relates to local or remote computing platforms or platform-as-a-service, the environment 126 may further include information on the geographical region, the type of account and/or the account holder, the type of account and/or the sub-account holder and details relating to storage space intended for use, e.g. deployment. of the app 120.

It should also be appreciated that in some examples, the target computing system 150 may be communicatively coupled to the remote app management platform 124 via a secure data connection 140. The may be an embodiment of the above-mentioned data connection 140. The secure data connection 140 may include a secure communication channel, a virtual private network (VPN), encrypting or cryptographically protecting data to be transmitted, e.g. end-to-end encryption, client-to-server encryption, or any combination thereof.

By way of example, the secure data connection 140 includes a WebSocket connection.

By way of example, the use of the app 120 includes developing, testing, accepting, deploying, provisioning, operating, running the app 120, respectively, or any combination thereof.

By way of example, testing the app 120 may include checking whether the functionalities and/or the performance of the app 120 developed by the user comply with the user's respective expectations, e.g. in the environment 126 of the target computing system 150. In example embodiments, deploying the app 120 may include releasing the app 120 to users which may then install and/or activate the released app 120 to fulfill their specific personal or business needs. For example, the app 120 may be deployed and provisioned to user for use of the app 120 on the target computing system 150 which may be embodied as a mobile device or a local or remote computing platform, or a platform-as-a-service. In some examples, the use may include operating the app 120 and even include starting or stopping to operate/run the app 120. This may imply, that the user may trigger or cause the target computing system 150 to start or stop to operate/run the app 120. The use may, e.g., updated, when a user has input that a stopped/running app 120 shall be started/stopped to run/operated.

It should also be appreciated that in some examples, the information about the environment 126 includes information about runtime resources required by the app 120 for the use on the target computing system 150.

In example embodiments, the runtime system, also called runtime environment, may primarily implement portions of an execution model. The runtime system or runtime environment may address a number of issues including the layout of application memory, how the program accesses variables, mechanisms for passing parameters between procedures, interfacing with the operating system, and otherwise. A compiler may make assumptions depending on the specific runtime system to generate correct code. Typically, the runtime system will have some responsibility for setting up and managing the stack and heap, and may include features such as garbage collection, threads or other dynamic features built into the language.

By way of example, there may be one environment 126 or several environments 126 available on the target computing system 150, wherein the several environments 126 may serve for similar or different types of use of apps.

By way of example , the application software component 106 and/or the processor 102 may be configured to send a trigger message from the remote app management platform 124 to the target computing system 150 to trigger preparing use of the app 120, the preparation including causing the target computing system 150 to retrieve, from the remote app management platform 124, information about a target set-up of the target computing system 150, and to set up the target computing system 150 according to the target set-up.

In example embodiments, the target computing system 150 actively may start the preparation only when or after the trigger message has been received from the remote app management platform 124. Hence, only upon receipt of the trigger message, the target computing system 150 may retrieve and/or pull information about a target set-up of the target computing system 150 from the remote app management platform 124. This may imply that the remote app management platform 124 may not actively push the target set-up to the target computing system 150. Hence, the data transfer for transferring the target set-up and the subsequent preparation may only start when or after the target computing system 150 actively requests this data from the remote app management platform 124.

By way of example, the target set-up may include the above-mentioned OpenShift container platform for Kubernetes that can automate the provisioning, management and scaling of apps.

In example embodiments, the information about the target set-up of the target computing system 150 may include data, e.g. libraries and/or executable files, which are required by the target computing system 150 to set up the target computing system 150 according to the target set-up. By way of example, information about the target set-up may include a script which may run on the target computing system 150 and which may carry out the preparation.

Example embodiments may include scenarios in which the target computing system 150 may have access to the data required for setting up the target computing system 150 according to the target set-up, e.g. on a data store of the target computing system 150 or by retrieving the required data by the target computing system 150 from another source, e.g. the internet. In an example embodiment, the required data may additionally or alternatively be available to the remote app management platform 124, wherein the required data may, e.g., be stored in the data store 108.

If required, data required for setting up the target computing system 150 according to the target set-up may be retrieved by the target computing system 150 from the remote app management platform 124 or from another source, e.g. the internet.

In example embodiments, the target set-up further includes at least one software container 158 for use of the app 120 in the environment 126 on the target computing system 150, wherein the application software component 106 and/or the processor 102 may further be configured to cause the target computing system 150 to provide the software container 158 and to install the app 120 in the software container 158.

In some example embodiments, a software container 158 or simply container may be a running process, with some added encapsulation features applied to it in order to keep it isolated from the host and from other containers. One of the most important aspects of container isolation may be that each container may interact with its own private filesystem. This filesystem may, e.g., be provided by a Docker image of Docker Inc., of San Fransicso, CA, USA.

Below, an example embodiment of a provision of the software container 158 and of an installation of the app 120 in the software container 158 is provided. By way of example, the app 120 which is to be retrieved by the target computing system 150 from the remote app management platform 124 may be used to create or retrieve an image or virtual appliance for a complete and executable version of the app 120. Such an image may include everything needed to run the app, e.g. the code or binary, runtimes, dependencies, config files, environment variables, libraries and any other filesystem objects required. Further, such a (Docker) image may include a template which may be fetched or retrieved from an image registry or image database, e.g. from Docker Inc.. Fetching or retrieving the image may be done directly by the target computing system 150 or by the remote app management platform 124 which may then make the retrieved image available for retrieval to the target computing system 150. If the image is deployed to a Docker environment it may then be executed as a Docker container. The docker run command may then create a container from a given image. Docker images may also be a reusable asset that can be deployed on any host.

For the example, that the app 120 retrieved by the target computing system 150 from the remote app management platform 124 includes a model characterizing the app 120, the model may be put in the container 158 in order to install the app 120 in the container 158. Then, dependencies of the app 120 may be provisioned, wherein the dependencies may, e.g., include database and file-storage details relating to the app 120 or the use of the app 120. Network resources to expose the app 120 over intra-net/internet may be arranged. User interfaces for the use of the app 120 may be provided. One or more databases for using the image, running the container 158 or using the app 120 may be created. The container may be connected with the database. A (Docker) image may be created for a complete and executable version of the app 120. The app 120 may be plugged to the monitoring and logging systems installed in the target computing system 150.

By way of example, the target set-up further includes at least a communication module 160 configured for communication with the remote app management platform 124, an operation module 162 configured for using apps 120, and a template repository 164 configured for storing image templates 166 required for building software containers 158, and wherein the operation module 162 is communicatively connected to the communication module 160 and to the template repository 164.

The communication module 160 and/or the operation module 162 may be functionalities realized as a software running on the target computing system 150, respectively. The communication module 160 may be configured to receive data from and send data to the remote app management platform 124, e.g., via the data connection 140 which may be a secure data connection 140.

The operation module 162 may, by way of example, support building an app image and then push, i.e. store, the app image in the template repository 164. Further, the operation module 162 may provision a database and a file storage folder for each used app 120. By way of example, the operation module 162 may support using the app 120, e.g. the operation module 162 may run the app 120. Furthermore, the operation module 162 may support configuring the app 120, e.g. support managing app constants and/or scheduled events.

The template repository 164 may store image templates 166, e.g. the above-mentioned (Docker) images, including templates which may be fetched or retrieved from an image registry or image database.

It should also be appreciated that in some examples, the application software component 106 and/or the processor 102 may be configured to cause the target computing system 150 to only start the preparation if the trigger message received from the remote app management platform 124 is a valid trigger message.

By way of example, the trigger message may include information about the remote app management platform 124, the target computing system 150, the app 120, the environment 126, the data connection 140, the type of use, user rights to use the app 120 or any combination thereof. The user managing the app 120 and/or the target computing system 150 may provide acceptable information about the mentioned item(s), e.g. via the remote app management UI 128 or directly to the target computing system 150. The provision of the acceptable information may allow the target computing system 150 to check whether the trigger message received from the remote app management platform 124 includes information on the mentioned item(s) which agrees with the information on the mentioned item(s) provided by the user. In case of agreement, the received trigger message may be accepted as a valid trigger message. In an example embodiment, the user managing the app 120 and/or the target computing system 150 may provide acceptable information about the mentioned item(s).

In example embodiments, the application software component 106 and/or the processor 102 may be configured to cause the target computing system 150 to automatically complete the preparation of the use of the app 120.

The automatic completion of the preparation may, by way of example, include that no local intervention or action of users or administrators at the location of the target computing system 150 may be required. This may mean, e.g., that for the completion of the preparation only the user's interaction with the remote app management UI 128, and optionally with the remote app development UI 122, and/or the remote app management platform 124 is required.

It should also be appreciated that in some examples, for a created app 120 available at the remote app management platform 124, the only required input may be the information about the type of use and the target computing system 150 of the app 120, wherein this information may be provided by the user interacting with the remote app management UI 128. This means, that in these examples, no additional interaction or input of this user or other users may be required for the automatic completion of the preparation of the use of the app 120 in the environment 126 at the target computing system 150.

Hence, a sort of "one-click" preparation or deployment of the target computing system 150 may be achieved which may be very convenient for users.

In example embodiments, the application software component 106 and/or the processor 102 may be configured to cause the target computing system 150 to automatically use the app 120 after receipt of the app 120 and the information about the environment 126.

The automatic use of the app 120 may, by way of example, include that no local intervention or action of users or administrators at the location of the target computing system 150 may be required. This may mean, e.g., that for the use of the app 120 only the user's interaction with the remote app management UI 128, and optionally with the remote app development UI 122, and/or the remote app management platform 124is required.

It should also be appreciated that in some examples, for a created app 120 to be used at the target computing system 150, the only required input may be the information about the type of use and the target computing system 150 of the app 120, wherein this information may be provided by the user interacting with the remote app management UI 128. This means, that in these examples, no additional interaction or input of this user or of other users may be required for the automatic the use of the app 120 in the environment 126 at the target computing system 150.

Hence, a sort of "one-click" use of the app 120 and the environment 126 at the target computing system 150 may be achieved which may be very convenient for users.

It should also be appreciated that in some examples the remote app management platform 124 may further include a remote app management module 134 configured to support management of an app 120; a remote app development module 136 configured to support app development; a data store 108 configured to store an app 120 and/or an environment 126; a remote platform portal 130 configured to support management of at least one target computing system(s) 150, environment(s) 126, app(s) 120, user(s), respectively, or any combination thereof, wherein the remote platform portal 130 is communicatively connected to the remote app management module 134, the remote app development module 136 and the data store 108; and a remote communication module 132 which is communicatively connected to the remote platform portal 130 and configured for communication with the target computing system 150, e.g. the communication module 160.

The remote app management module 134 may enable or facilitate managing apps 120. The remote app management module 134 may be, by way of example, communicatively connected to the remote app management UI 128 which may be provided to a user for inputting information about a type of use and a target computing system 150 of the app 120. The remote app development module 136 may enable or facilitate developing or creating apps 120. The remote app development module 136 may be, by way of example, communicatively connected to the remote app development UI 122 which may be provided to a user for inputting information required for developing or creating an app. The remote app development module 136 may be or interact with, e.g., an ADF, IDE allowing for app development using visual model-based representations which are mentioned above and which may be used to develop the app 120. The data store 108 may be used to store one or more developed or created app(s) 120 and one or more environment(s) 126, e.g., an environment 126 suitable for use of a particular app 120 on a particular target computing system 150. The remote app development module 136 may be communicatively coupled with the data store 108, e.g. for transmitting apps 120 which may be under development or are already be completed.

The remote platform portal 130 may serve to register one or more target computing system(s) 150 in the remote app management platform 124. This registration may be required to allow for communication of the remote app management platform 124 with the respective target computing system 150, e.g., to allow for preparing the respective target computing system 150 for use of an app 120 and, by way of example, to allow for using an app 120 on the respective target computing system 150 as explained above. The remote platform portal 130 may further serve to manage or orchestrate several target computing systems 150, environments 126, apps 120, users, or any combination thereof. By way of example, the remote platform portal 130 may support the preparation of the respective target computing system 150 for use of an app 120 and, by way of example, support using an app 120 on the respective target computing system 150 as explained above. This may be achieved, e.g., by retrieving or gathering the data required for the respective purpose through the remote platform portal 130, wherein the data may include, e.g. a particular app 120 and a suitable environment 126. The mentioned data may then be communicated to the remote communication module 132 which may make this data available for retrieval by the respective target computing system 150.

In this context, managing or orchestrating the target computing system 150 may be understood such that management actions or tasks may be taken or triggered by the remote platform portal 130 and then carried out at or by the target computing system 150 which are related to the preparation of the use of the app 120, and/or the use of the app 120. These management actions or tasks may, e.g., not include other maintenance or operation actions or tasks which are not related to the preparation of the use of the app 120, and/or the use of the app 120.

The remote communication module 132 may be configured for communication with the target computing system via the data connection 140 which may, e.g., include a secure data connection.

By way of example, the application software component 106 and/or the processor 102 may be configured to receive from the user information about rights of at least one first further user for accessing the app 120 for a given purpose, the given purpose including developing, using, administering, managing the app 120, or any combination thereof; and to grant access to the app 120 for the given purpose only to the at least one first further user having suitable access rights.

In example embodiments, the user providing information about these access rights may be considered as an administrator, project owner or the like, e.g. with respect to one or more app uses cases, projects, apps. Furthermore, the first further user(s) to who access rights are given may be considered as manager, developer, scrum master, business engineer, product owner or the like, e.g. with respect to one or more apps or projects. In some example embodiments, there may also only be one first further user.

By way of example, the granted rights for accessing an app 120 may include that the entitled first further user(s) may access the remote app management platform 124, e.g. including the remote app development UI 122 and/or the remote app management UI 128, or the target computing system 150, e.g. however only, in order to access the app 120 for the permitted use of the app 120.

It should also be appreciated that in some examples, the user providing information about access rights provides this information via the remote app management UI 128.

In example embodiments, the user providing information about access rights may choose to grant the access rights to the at least one further first user in line with a role-based access control, e.g. including granting access to the respective first further user according to their respective role in an organization, project company or the like. To this end, the remote app management UI 128 may provide an according access rights grant option to the user for selection.

It should also be appreciated that in some examples, the application software component 106 and/or the processor 102 may be configured to receive from the user information about rights of at least one second further user for accessing the remote computing platform 124, the target computing system 150, the environment 126, or any combination thereof; and to grant access to the remote computing platform 124, the target computing system 150, the environment 126, or any combination thereof, only to the at least one second further user having suitable access rights.

In example embodiments, the user providing information about these access rights may be considered as manager or owner of the target computing system 150, a supervisory administrator or the like, e.g. with respect to remote app management platform 124 and/or target computing system(s) 150. Furthermore, the at least one second further user to who access rights are granted may be considered as administrator, developer, manager or the like, e.g. with respect to one or more apps or projects. In some example embodiments, there may also only be one second further user.

It should also be appreciated that in some examples, the user providing information about access rights provides this information via the remote app management UI 128.

In example embodiments, the user providing information about access rights may choose to grant the access rights to the at least one further second user in line with a role-based access control, e.g. including granting access to the respective second further user according to their respective role in an organization, project company or the like. To this end, the remote app management UI 128 may provide an according access rights grant option to the user for selection.

By way of example, the further second user(s) may be the user that is entitled to grant access rights to the further first user(s) mentioned above. This concept may involve a cascade of granting access rights, wherein the user granting access rights to second further user(s) may be competent to define which access rights the second further user(s) may grant to further first user(s).

In example embodiments, the application software component 106 and/or the processor 102 may be configured to cause the target computing system 150 to store backup data relating to the environment 126 and/or the app 120 in a backup repository. The stored backup data may, e.g. be chosen such, that a quick recovery of the environment 126 and/or of the app 120 is enabled. The backup may, by way of example, be carried out in a given frequency, e.g. hourly, daily, or the like, or be triggered by a given event, e.g. an additional user is granted access to or is using the app, or when a backup, update or shutdown is carried out for the target computing system 150, or the like.

It should also be appreciated that in some examples, the application software component 106 and/or the processor 102 may be configured to cause the target computing system 150 to use at least two replicas of the app 120 and/or of the environment 126.

Generally, software replicas may be used to share information so as to ensure consistency between redundant resources to improve reliability, fault-tolerance, or accessibility. The at least two replicas may, by way of example, be exact copies of the respective app 120 and/or of the environment 126 and may be used and/or installed independently on the target computing system 150. By way of example, the replicas may include active replication, which is performed by processing the same request at every replica, or passive replication, which involves processing every request on a single replica and transferring the result to the other replica(s).

Generally, it should be appreciated that the concepts presented in this patent document may contribute to achieve a software environment which may (almost) completely be automated so that there may be no need for an operations team to manage it. By way of example, the automation may include the deployment and the maintenance, e.g., of the respective target computing system 150, the respective environment 126, the respective use of the respective app 120, and maybe even the automation of the development of an app 120. Such automation concepts with respect to software or app management are sometimes called "low-ops" or even "no-ops" implying little to no efforts required for operating and/or maintaining a computing system or software, e.g. the respective target computing system 150 including the preparation of the use of an app 120 and/or the use of the app 120 on the respective target computing system 150. The advantage of such approaches is that no specialized IT staff may be required to operate or manage the respective target computing system 150 thus allowing for non-expert staff for this purpose and for cost reduction. Additionally, it should be appreciated that the concepts presented in this patent document may facilitate "multicloud" use cases, i.e. e.g. the use of multiple cloud computing and storage services in a single heterogeneous architecture. This may be achieved by identifying at least two different target computing platforms 150 as cloud computing and storage services, e.g. including at least one "on-premises" cloud infrastructure or service. Such multicloud approaches may be supported by the present app management concept since it may allow for easy portability of the created app 120 from one target computing system 150 to another.

The described examples may provide an efficient way for users to manage apps by enabling the described enhanced management of apps. Thus, the described examples may reduce the total cost of ownership of the management of apps and of such apps in general, by alleviating or at least minimizing the need for users or administrators to have advanced coding knowledge or to manually make conscious selections of many options. Such efficient app management can be leveraged in any industry (e.g., Aerospace & Defense, Automotive & Transportation, Consumer Products & Retail, Electronics & Semiconductor, Energy & Utilities, Industrial Machinery & Heavy Equipment, Marine, or Medical Devices & Pharmaceuticals). Such app management may also be applicable to consumer facing the need to quickly manage own apps.

In particular, the above examples are equally applicable to the computer system 100, e.g. the remote app management platform 124, arranged and configured to execute the steps of the computer-implemented method of managing an app 120 and to the corresponding computer-readable medium explained in the present patent document, respectively.

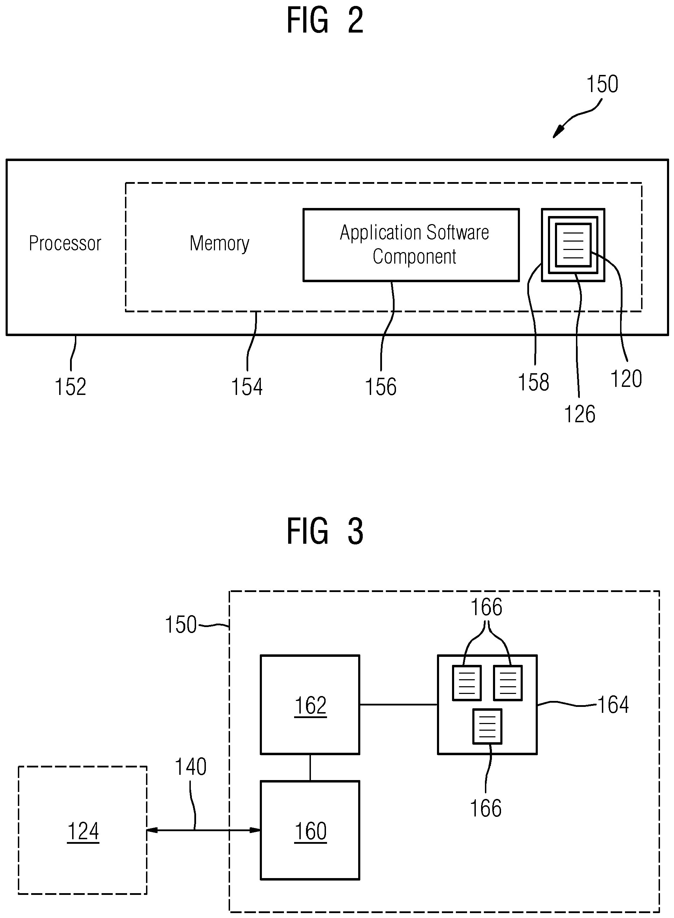

Fig. 2 illustrates a functional block diagram of another exemplary target computing system 150. According to this example, the target computing system 150 includes a software container 158 for use of the app 120 in the environment 126 on the target computing system 150.

As illustrated in Fig. 2, the memory 154 may include the software container 158. In other examples, the software container 158 may be included in the Application Software Component 156. The software container 158 may serve to install the app 120 which may then be used. An according set-up of the target computing system 150 may be part of the target set-up of the target computing system 150 mentioned above.

Fig. 3 illustrates a functional block diagram of yet another exemplary target computing system 150 interacting with the remote app management platform 124. According to this example, the target computing system 150 includes a communication module 160 configured for communication with the remote app management platform 124, an operation module 162 configured for using app(s) 120, and a template repository 164 configured for storing image templates 166 required for building software containers 158. The operation module 162 is communicatively connected to the communication module 160 and to the template repository 164. The communication module 160 may communicate with the remote app management platform 124 via the data connection 140 which may be a secure data connection.

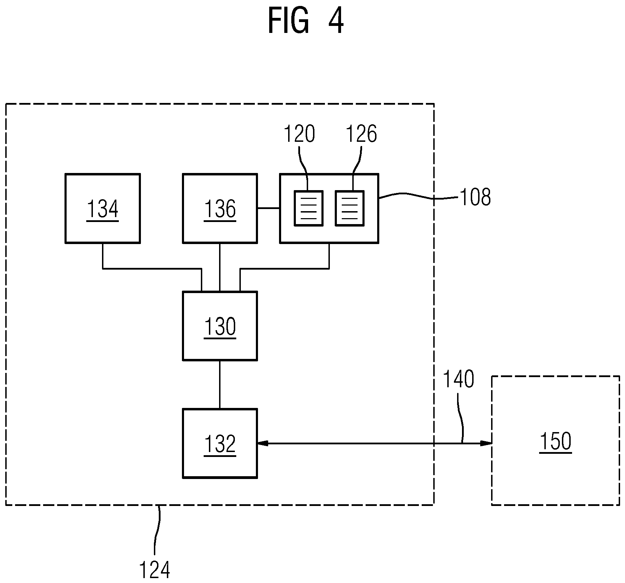

Fig. 4 illustrates a functional block diagram of another exemplary remote app management platform 124 interacting with the target computer system 150. In this example, the remote app management platform 124 may include a remote app management module 134, a remote app development module 136, a data store 108, a remote platform portal 130, and a remote communication module 132 which have been explained above. The remote app development module 136 may be communicatively coupled with the data store 108, e.g. for transmitting apps 120 which may be under development or are already be completed. Further, the remote platform portal 130 may be communicatively connected to the remote app management module 134, the remote app development module 136, the data store 108 and the remote communication module 132 which may be configured for communication with the target computing system 150 via the data connection 140 which may, e.g., include a secure data connection.

It is important to note that while the disclosure includes a description in the context of a fully functional system and/or a series of acts, those skilled in the art will appreciate that at least portions of the mechanism of the present disclosure and/or described acts are capable of being distributed in the form of computer-executable instructions contained within non-transitory machine-usable, computer-usable, or computer-readable medium in any of a variety of forms, and that the present disclosure applies equally regardless of the particular type of instruction or data bearing medium or storage medium utilized to actually carry out the distribution. Examples of non-transitory machine usable/readable or computer usable/readable mediums include: ROMs, EPROMs, magnetic tape, floppy disks, hard disk drives, SSDs, flash memory, CDs, DVDs, and Blu-ray disks. The computer-executable instructions may include a routine, a sub-routine, programs, applications, modules, libraries, a thread of execution, and/or the like. Still further, results of acts of the methodologies may be stored in a computer-readable medium, displayed on a display device, and/or the like.

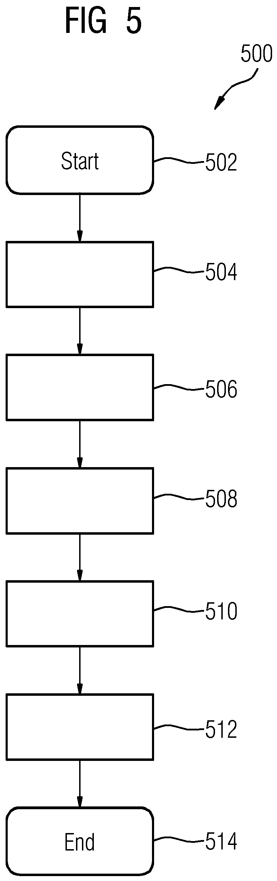

Referring now to Fig. 5, a methodology 500 that facilitates managing apps is illustrated. The method may start at 502 and the methodology may include several acts carried out through operation of at least one processor.

These acts may include an act 504 of providing a remote app development user interface (UI) to a user for developing the app, wherein the remote app development UI is communicatively coupled to a remote app management platform; an act 506 of creating, by the remote app management platform, the app based on the user's interaction with the remote app development UI; an act 508 of receiving from the user information about a type of use and a target computing system of the app, respectively, via a remote app management UI which is provided to the user and which is communicatively coupled to the remote app management platform; an act 510 of causing the target computing system to receive from the remote app management platform the app and information about an environment suitable for the type of use and target computing system of the app; and an act 512 of causing the target computing system to use the app in the environment. At 514 the methodology may end.

It should be appreciated that the methodology 900 may include other acts and features discussed previously with respect to the computer-implemented method of managing an app.

For example, the methodology may include the act of sending a trigger message from the remote app management platform to the target computing system to trigger preparing use of the app; the act of causing the target computing system to retrieve, from the remote app management platform, information about a target set-up of the target computing system, and to set up the target computing system according to the target set-up.

Further, the methodology may include the act of causing the target computing system to provide a software container and to install the app in the software container, wherein the target set-up further includes at least one software container for use of the app in the environment on the target computing system.

Example embodiments of the methodology may also include the act of causing the target computing system to only start the preparation if the trigger message received from the remote app management platform is a valid trigger message.

Further examples of the methodology may further include the act of causing the target computing system to automatically complete the preparation of the use of the app.

According to some examples, the methodology may include the act of causing the target computing system to automatically use the app after receipt of the app and the information about the environment.

Example embodiments of the methodology may also include the act of receiving from the user information about rights of at least one first further user for accessing the app 120 for a given purpose, the given purpose including developing, using, administering, managing the app 120, or any combination thereof; and the act of granting access to the app 120 for the given purpose only to the at least one first further user having suitable access rights.

Further examples of the methodology may further include the act of receiving from the user information about rights of at least one second further user for accessing the remote computing platform 124, the target computing system 150, the environment 126, or any combination thereof; and the act of granting access to the remote computing platform 124, the target computing system 150, the environment 126, or any combination thereof, only to the at least one second further user having suitable access rights.

As discussed previously, acts associated with these methodologies (other than any described manual acts such as an act of manually making a selection through the input device) may be carried out by one or more processors. Such processor(s) may be included in one or more data processing systems, for example, that execute software components operative to cause these acts to be carried out by the one or more processors. In an example embodiment, such software components may comprise computer-executable instructions corresponding to a routine, a sub-routine, programs, applications, modules, libraries, a thread of execution, and/or the like. Further, it should be appreciated that software components may be written in and/or produced by software environments/languages/frameworks such as Java, JavaScript, Python, C, C#, C++ or any other software tool capable of producing components and graphical user interfaces configured to carry out the acts and features described herein.

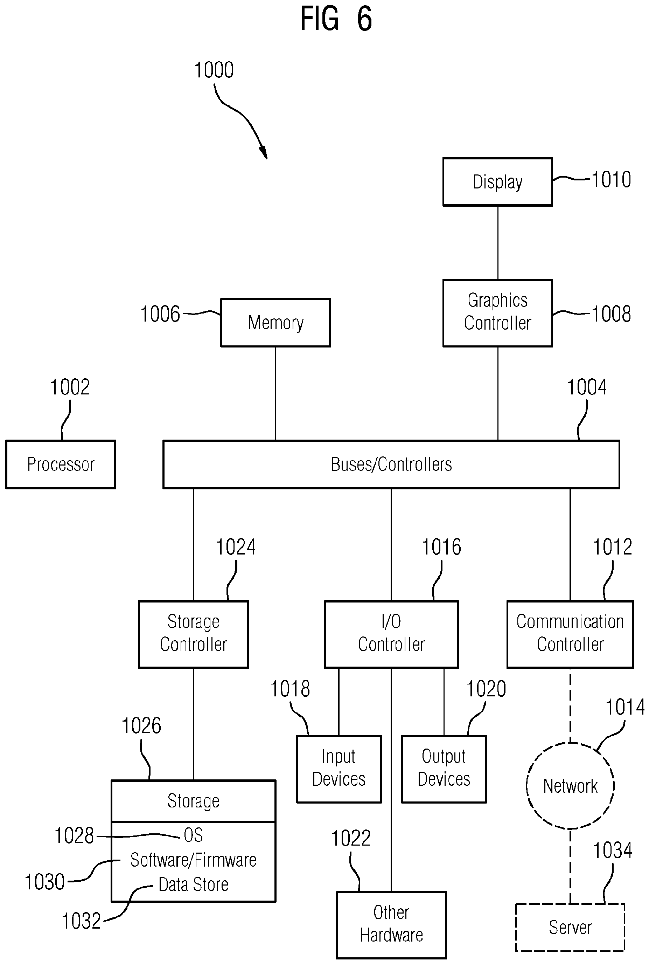

Fig. 6 illustrates a block diagram of a data processing system 1000 (also referred to as a computer system) in which an embodiment can be implemented, for example, as a portion of a product system, and/or other system operatively configured by software or otherwise to perform the processes as described herein. The data processing system 1000 may include, for example, the remote app management platform 124 and/or the computer system or data processing system 100 mentioned above. The data processing system depicted includes at least one processor 1002 (e.g., a CPU) that may be connected to one or more bridges/controllers/buses 1004 (e.g., a north bridge, a south bridge). One of the buses 1004, for example, may include one or more I/O buses such as a PCI Express bus. Also connected to various buses in the depicted example may include a main memory 1006 (RAM) and a graphics controller 1008. The graphics controller 1008 may be connected to one or more display devices 1010. It should also be noted that in some embodiments one or more controllers (e.g., graphics, south bridge) may be integrated with the CPU (on the same chip or die). Examples of CPU architectures include IA-32, x86-64, and ARM processor architectures.

Other peripherals connected to one or more buses may include communication controllers 1012 (Ethernet controllers, WiFi controllers, cellular controllers) operative to connect to a local area network (LAN), Wide Area Network (WAN), a cellular network, and/or other wired or wireless networks 1014 or communication equipment.

Further components connected to various busses may include one or more I/O controllers 1016 such as USB controllers, Bluetooth controllers, and/or dedicated audio controllers (connected to speakers and/or microphones). It should also be appreciated that various peripherals may be connected to the I/O controller(s) (via various ports and connections) including input devices 1018 (e.g., keyboard, mouse, pointer, touch screen, touch pad, drawing tablet, trackball, buttons, keypad, game controller, gamepad, camera, microphone, scanners, motion sensing devices that capture motion gestures), output devices 1020 (e.g., printers, speakers) or any other type of device that is operative to provide inputs to or receive outputs from the data processing system. Also, it should be appreciated that many devices referred to as input devices or output devices may both provide inputs and receive outputs of communications with the data processing system. For example, the processor 1002 may be integrated into a housing (such as a tablet) that includes a touch screen that serves as both an input and display device. Further, it should be appreciated that some input devices (such as a laptop) may include a plurality of different types of input devices (e.g., touch screen, touch pad, keyboard). Also, it should be appreciated that other peripheral hardware 1022 connected to the I/O controllers 1016 may include any type of device, machine, or component that is configured to communicate with a data processing system.

Additional components connected to various busses may include one or more storage controllers 1024 (e.g., SATA). A storage controller may be connected to a storage device 1026 such as one or more storage drives and/or any associated removable media, which can be any suitable non-transitory machine usable or machine-readable storage medium. Examples include nonvolatile devices, volatile devices, read only devices, writable devices, ROMs, EPROMs, magnetic tape storage, floppy disk drives, hard disk drives, solid-state drives (SSDs), flash memory, optical disk drives (CDs, DVDs, Blu-ray), and other known optical, electrical, or magnetic storage devices drives and/or computer media. Also, in some examples, a storage device such as an SSD may be connected directly to an I/O bus 1004 such as a PCI Express bus.

A data processing system in accordance with an embodiment of the present disclosure may include an operating system 1028, software/firmware 1030, and data stores 1032 (that may be stored on a storage device 1026 and/or the memory 1006). Such an operating system may employ a command line interface (CLI) shell and/or a graphical user interface (GUI) shell. The GUI shell permits multiple display windows to be presented in the graphical user interface simultaneously, with each display window providing an interface to a different application or to a different instance of the same application. A cursor or pointer in the graphical user interface may be manipulated by a user through a pointing device such as a mouse or touch screen. The position of the cursor/pointer may be changed and/or an event, such as clicking a mouse button or touching a touch screen, may be generated to actuate a desired response. Examples of operating systems that may be used in a data processing system may include Microsoft Windows, Linux, UNIX, iOS, and Android operating systems. Also, examples of data stores include data files, data tables, relational database (e.g., Oracle, Microsoft SQL Server), database servers, or any other structure and/or device that is capable of storing data, which is retrievable by a processor.

The communication controllers 1012 may be connected to the network 1014 (not a part of data processing system 1000), which can be any public or private data processing system network or combination of networks, as known to those of skill in the art, including the Internet. Data processing system 1000 can communicate over the network 1014 with one or more other data processing systems such as a server 1034 (also not part of the data processing system 1000). However, an alternative data processing system may correspond to a plurality of data processing systems implemented as part of a distributed system in which processors associated with several data processing systems may be in communication by way of one or more network connections and may collectively perform tasks described as being performed by a single data processing system. Thus, it is to be understood that when referring to a data processing system, such a system may be implemented across several data processing systems organized in a distributed system in communication with each other via a network.

Further, the term "controller" means any device, system or part thereof that controls at least one operation, whether such a device is implemented in hardware, firmware, software or some combination of at least two of the same. It should be noted that the functionality associated with any particular controller may be centralized or distributed, whether locally or remotely.

In addition, it should be appreciated that data processing systems may be implemented as virtual machines in a virtual machine architecture or cloud environment. For example, the processor 1002 and associated components may correspond to a virtual machine executing in a virtual machine environment of one or more servers. Examples of virtual machine architectures include VMware ESCi, Microsoft Hyper-V, Xen, and KVM.

Those of ordinary skill in the art will appreciate that the hardware depicted for the data processing system may vary for particular implementations. For example, the data processing system 1000 in this example may correspond to a computer, workstation, server, PC, notebook computer, tablet, mobile phone, and/or any other type of apparatus/system that is operative to process data and carry out functionality and features described herein associated with the operation of a data processing system, computer, processor, and/or a controller discussed herein. The depicted example is provided for the purpose of explanation only and is not meant to imply architectural limitations with respect to the present disclosure.

Also, it should be noted that the processor described herein may be located in a server that is remote from the display and input devices described herein. In such an example, the described display device and input device may be included in a client device that communicates with the server (and/or a virtual machine executing on the server) through a wired or wireless network (which may include the Internet). In some embodiments, such a client device, for example, may execute a remote desktop application or may correspond to a portal device that carries out a remote desktop protocol with the server in order to send inputs from an input device to the server and receive visual information from the server to display through a display device. Examples of such remote desktop protocols include Teradici's PCoIP, Microsoft's RDP, and the RFB protocol. In such examples, the processor described herein may correspond to a virtual processor of a virtual machine executing in a physical processor of the server.

As used herein, the terms "component" and "system" are intended to encompass hardware, software, or a combination of hardware and software. Thus, for example, a system or component may be a process, a process executing on a processor, or a processor. Additionally, a component or system may be localized on a single device or distributed across several devices.

Also, as used herein a processor corresponds to any electronic device that is configured via hardware circuits, software, and/or firmware to process data. For example, processors described herein may correspond to one or more (or a combination) of a microprocessor, CPU, FPGA, ASIC, or any other integrated circuit (IC) or other type of circuit that is capable of processing data in a data processing system, which may have the form of a controller board, computer, server, mobile phone, and/or any other type of electronic device.

Those skilled in the art will recognize that, for simplicity and clarity, the full structure and operation of all data processing systems suitable for use with the present disclosure is not being depicted or described herein. Instead, only so much of a data processing system as is unique to the present disclosure or necessary for an understanding of the present disclosure is depicted and described. The remainder of the construction and operation of data processing system 1000 may conform to any of the various current implementations and practices known in the art.

Also, it should be understood that the words or phrases used herein should be construed broadly, unless expressly limited in some examples. For example, the terms "include" and "comprise," as well as derivatives thereof, mean inclusion without limitation. The singular forms "a", "an" and "the" are intended to include the plural forms as well, unless the context clearly indicates otherwise. Further, the term "and/or" as used herein refers to and encompasses any and all possible combinations of one or more of the associated listed items. The term "or" is inclusive, meaning and/or, unless the context clearly indicates otherwise. The phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like.

Also, although the terms "first", "second", "third" and so forth may be used herein to describe various elements, functions, or acts, these elements, functions, or acts should not be limited by these terms. Rather these numeral adjectives are used to distinguish different elements, functions or acts from each other. For example, a first element, function, or act could be termed a second element, function, or act, and, similarly, a second element, function, or act could be termed a first element, function, or act, without departing from the scope of the present disclosure.

In addition, phrases such as "processor is configured to" carry out one or more functions or processes, may mean the processor is operatively configured to or operably configured to carry out the functions or processes via software, firmware, and/or wired circuits. For example, a processor that is configured to carry out a function/process may correspond to a processor that is executing the software/firmware, which is programmed to cause the processor to carry out the function/process and/or may correspond to a processor that has the software/firmware in a memory or storage device that is available to be executed by the processor to carry out the function/process. It should also be noted that a processor that is "configured to" carry out one or more functions or processes, may also correspond to a processor circuit particularly fabricated or "wired" to carry out the functions or processes (e.g., an ASIC or FPGA design). Further the phrase "at least one" before an element (e.g., a processor) that is configured to carry out more than one function may correspond to one or more elements (e.g., processors) that each carry out the functions and may also correspond to two or more of the elements (e.g., processors) that respectively carry out different ones of the one or more different functions.

In addition, the term "adjacent to" may mean: that an element is relatively near to but not in contact with a further element; or that the element is in contact with the further portion, unless the context clearly indicates otherwise.

Although an exemplary embodiment of the present disclosure has been described in detail, those skilled in the art will understand that various changes, substitutions, variations, and improvements disclosed herein may be made without departing from the spirit and scope of the disclosure in its broadest form.

None of the description in the present patent document should be read as implying that any particular element, step, act, or function is an essential element, which must be included in the claim scope: the scope of patented subject matter is defined only by the allowed claims.

## Claims

1. Computer-implemented method of managing an app (120), including:
providing a remote app development user interface (UI) (122) to a user for developing the app (120), wherein the remote app development UI (122) is communicatively coupled to a remote app management platform (124);
creating, by the remote app management platform (124), the app (120) based on the user's interaction with the remote app development UI (122);
receiving from the user information about a type of use and a target computing system (150) of the app (120), respectively, via a remote app management UI (128) which is provided to the user and which is communicatively coupled to the remote app management platform (124);
causing the target computing system (150) to receive from the remote app management platform (124) the app (120) and information about an environment (126) suitable for the type of use and target computing system (150) of the app (120); and
causing the target computing system (150) to use the app (120) in the environment (126).

2. Computer-implemented method according to claim 1,
wherein the target computing system (150) is communicatively coupled to the remote app management platform (124) via a secure data connection (140).

3. Computer-implemented method according to any one of the preceding claims,
wherein the use of the app (120) includes developing, testing, accepting, deploying, provisioning, operating, running the app (120), respectively, or any combination thereof.

4. Computer-implemented method according to any one of the preceding claims,
wherein the information about the environment (126) includes information about runtime resources required by the app (120) for the use on the target computing system (150).

5. Computer-implemented method according to any one of the preceding claims, further including:
sending a trigger message from the remote app management platform (124) to the target computing system (150) to trigger preparing use of the app (120), the preparation including causing the target computing system to (150):
retrieve, from the remote app management platform (124), information about a target set-up of the target computing system (150), and
set up the target computing system (150) according to the target set-up.

6. Computer-implemented method according to claim 5,
wherein the target set-up further includes at least one software container (158) for use of the app (120) in the environment (126) on the target computing system (150),
the method further including:
causing the target computing system (150) to provide the software container (158) and to install the app (120) in the software container (158).

7. Computer-implemented method according to claim 5 or 6, wherein the target set-up further includes at least a communication module (160) configured for communication with the remote app management platform (124), an operation module (162) configured for using apps, and a template repository (164) configured for storing image templates (166) required for building software containers (158), and
wherein the operation module (162) is communicatively connected to the communication module (160) and to the template repository (164).

8. Computer-implemented method according to any one of claims 5 to 7, further including:
causing the target computing system (150) to only start the preparation if the trigger message received from the remote app management platform (124) is a valid trigger message.

9. Computer-implemented method according to any one of claims 5 to 8, further including:
causing the target computing system (150) to automatically complete the preparation of the use of the app (120).

10. Computer-implemented method according to any one of the preceding claims, further including:
causing the target computing system (150) to automatically use the app (120) after receipt of the app (120) and the information about the environment (126).

11. Computer-implemented method according to any one of the preceding claims, wherein the remote app management platform (124) further includes:
a remote app management module (134) configured to support management of an app (120);
a remote app development module (136) configured to support app development;
a data store (108) configured to store an app (120)
and/or an environment (126);
a remote platform portal (130) configured to support management of at least one target computing system(s) (150), environment(s) (126), app(s) (120), user(s), respectively, or any combination thereof, wherein the remote platform portal (130) is communicatively connected to the remote app management module (134), the remote app development module (136) and the data store (108);
and
a remote communication module (132) which is communicatively connected to the remote platform portal (130) and configured for communication with the target computing system (150).

12. Computer-implemented method according to any one of the preceding claims, further including:
receiving from the user information about rights of at least one first further user for accessing the app (120) for a given purpose, the given purpose including developing, using, administering, managing the app (120), or any combination thereof; and
granting access to the app (120) for the given purpose only to the at least one first further user having suitable access rights.

13. Computer-implemented method according to any one of the preceding claims, further including:
receiving from the user information about rights of at least one second further user for accessing the remote computing platform (124), the target computing system (150), the environment (126), or any combination thereof ; and
granting access to the remote computing platform (124), the target computing system (150), the environment (126), or any combination thereof, only to the at least one second further user having suitable access rights.

14. Computer system (100, 124) arranged and configured to execute the steps of the computer-implemented method according to any one of the preceding claims.

15. A computer-readable medium encoded with executable instructions, that when executed, cause the computer system (124) according to claim 14 to carry out a method according to any one of claims 1 to 13.
